# EUROPEAN PATENT APPLICATION

(11) **EP 3 311 934 A1**
(43) Date of publication of application: **25.04.2018**
(21) Application number: 17192333.7
(22) Date of filing: 21.09.2017
(51) Int. Cl.: B21D 53/84, B21D 13/10, B21D 31/04, B21D 47/00, B21D 51/10, B23P 15/00, F02C 6/08

(54) **COMPLEMENTARY STRUCTURE**

(30) Priority: 21.10.2016 GB 201617840
(71) Applicant: Rolls-Royce plc, London SW1E 6AT (GB)
(72) Inventor: Hussain, Zahid, Derby, Derbyshire DE24 8BJ (GB); Taylor-Tibbott, Oliver, Derby, Derbyshire DE24 8BJ (GB)
(74) Representative: Rolls-Royce plc

(57) **Abstract**

A method of manufacturing an annular component is provided. The method comprises the steps of providing an annular shell (90) to form the outer wall of the component and a plurality of flat annular rings wherein a radially inner edge of each ring is shaped to correspond to a cross-section of the shell at a different position along its length. The method comprises attaching each ring to the ring(s) adjacent to it at a plurality of circumferentially spaced discrete positions. The method comprises deforming each flat annular ring into a corrugated three-dimensional shape, wherein the corrugations extend out of the flat plane and comprise radially defined peaks and troughs. The method comprises locating the shell (90) within the plurality of attached, deformed annular rings (91-95). The method comprises attaching the plurality of attached, deformed annular rings (91-95) to the shell (90) to form the component, so that the plurality of attached, deformed annular rings (91-95) provide structural reinforcement to the shell (91-95).

## Description

The present disclosure concerns a method of manufacturing a bleed outlet duct for a gas turbine engine and/or a method of manufacturing an annular component with a complementary structure and/or an annular component comprising an annular shell and a complementary structure.

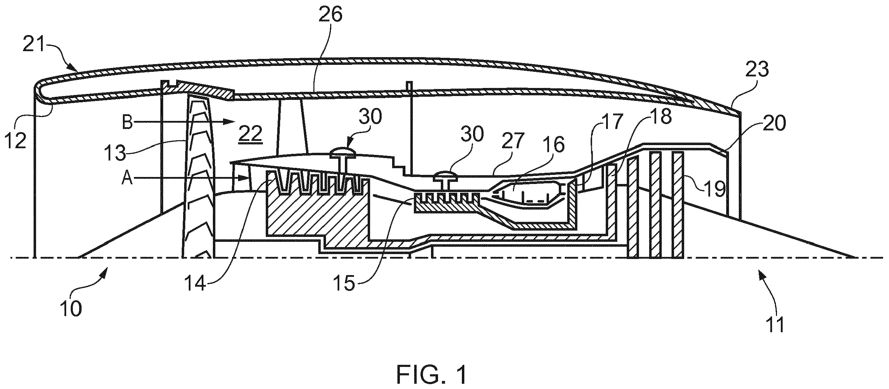

Referring to Figure 1, a ducted fan (or turbofan) gas turbine engine (e.g. a jet engine) generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and a core exhaust nozzle 20. A nacelle 21 generally surrounds the engine 10 and defines the intake 12 and a bypass duct 22 defined by an inner wall 27 and an outer wall 26, and an exhaust nozzle 23.

The gas turbine engine 10 works in the conventional manner so that air entering the intake 12 is accelerated by the fan 13 to produce two air flows: a first airflow A into the intermediate pressure compressor 14 of the engine core and a second airflow B which passes through the bypass duct 22 to provide propulsive thrust. The intermediate pressure compressor 14 compresses the airflow A directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive, the high, intermediate and low pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

During engine operation and particularly when changing rotational speed at low power it is important to ensure that the pressure ratio across each compressor 14, 15 remains below a critical working point, otherwise the engine 10 can surge and flow through the engine 10 breaks down. This can cause damage to the engine's components as well as aircraft handling problems.

To maintain a preferred pressure difference across a compressor 14, 15, or even just one stage of a compressor 14, 15, bleed outlet ducts 30 are provided to release pressure from an upstream part of a compressor 14,15. For example, when a gas turbine engine is operating under transient conditions, e.g. when decelerating, it may be necessary to bleed air at high pressure from the core gas flow A through the engine. Operation of bleed outlet ducts 30 and engine operability are described in "The Jet Engine" 6th Edition, 2005, Rolls-Royce plc, pages 79-80, and details of such operation will therefore only be briefly mentioned herein.

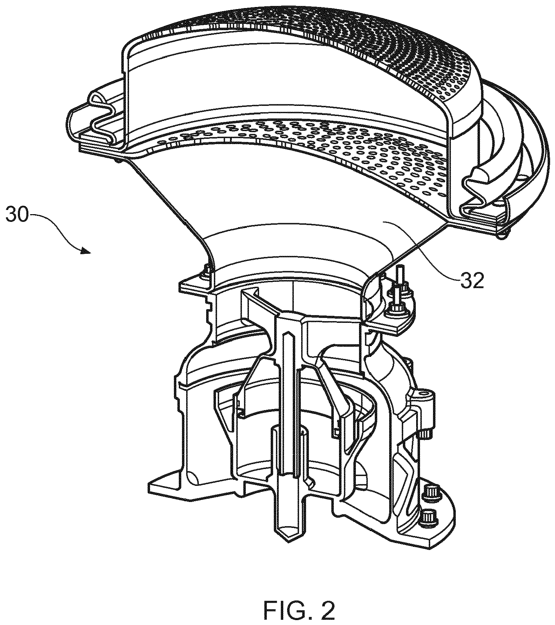

The flow of bleed air from the core gas flow into the bypass flow takes place over a substantial pressure drop, which can require the bleed outlet duct to withstand high pressures and/or pressure transients. Figure 2 shows a typical bleed outlet duct known in the prior art. The pressure skin 32 is made from a solid piece of material. With increases in size of gas turbine engines and the operating pressures of the bleed outlet ducts, the pressure skin 32 must be made thicker and heavier to withstand this pressure.

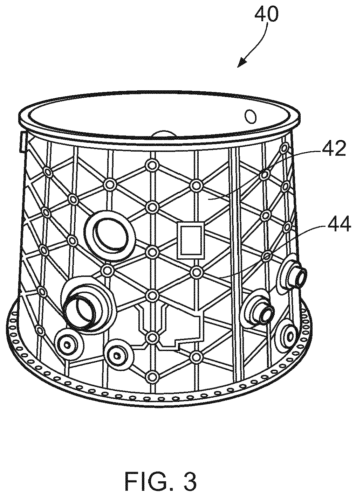

A known method of enabling a structure to withstand high pressures, whilst minimising its weight, is diamond web reinforcement. A typical implementation of diamond web reinforcement in use on a gas turbine component is shown in Figure 3. An annular component 40, shown in Figure 3 as a frustoconical component, includes a pressure skin 42 and triangular shaped webbing 44 surrounding the pressure skin 42. The annular component 40 is manufactured from a single, solid piece of material. The webbing 44 is machined into the piece of material to create the pressure skin 42 and webbing 44 arrangement.

Although such a structure is lighter, machining diamond web reinforcement into a solid piece of material can be time consuming and generates a lot of waste material from all the material that is machined away. It would therefore be desirable to have a structure capable of withstanding high pressures and/or high pressure differentials, that is both relatively light and can be easily manufactured with minimal waste.

According to a first aspect there is provided a method of manufacturing an annular component, the method comprising the steps of providing an annular shell to form the outer wall of the component and a plurality of flat annular rings wherein a radially inner edge of each ring is shaped to correspond to a cross-section of the shell at a different position along its length. The method comprises attaching each ring to the ring(s) adjacent to it at a plurality of circumferentially spaced discrete positions. The method comprises deforming each flat annular ring into a corrugated three-dimensional shape, wherein the corrugations extend out of the flat plane and comprise radially defined peaks and troughs. The method comprises locating the shell within the plurality of attached, deformed annular rings. The method comprises attaching the plurality of attached, deformed annular rings to the shell to form the component, so that the plurality of attached, deformed annular rings provide structural reinforcement to the shell.

The shell may be a thin wall shell. The diameter (e.g. average diameter) of the shell may be 10 times the thickness of the shell. The diameter (e.g. average diameter) of the shell may be 20 times the thickness of the shell. The diameter (e.g. average diameter) of the shell may be 30 times the thickness of the shell. The outer wall may be the wall that contains the gas or fluid inside the component. The outer wall may provide a boundary and/or containment for the gas/fluid inside the annular component. The outer wall may have an inner gas washed surface and an outer non gas washed surface. The shell may have a central axis. The axis may pass through the centre of the annular shell.

The annular rings may be circular. The annular rings may be any shape that complements the annular component (for example elliptical, rectangular). The annular rings may include variations in shape around the circumference. The annular rings may have a radially inner edge and/or a radially outer edge. The shape of the inner edge of an annular ring may be the same shape as the outer boundary of a cross section of the annular component.

The cross sections that the annular rings correspond to may be evenly (i.e. regularly) spaced along its length. The cross sections of the shell may be through a plane normal to the central axis.

An attachment may be the provision of a mechanical connection between adjacent rings. The attachment method may be, for example, by welding or fasteners. The circumferential width of the attachments may be the same as the thickness of the rings. The circumferential width of the attachments may be twice the thickness of the rings. The circumferential width of the attachments may be three times the thickness of the rings. The circumferential width of the attachments may be greater than three times the thickness of the rings. Attachments may be regularly, circumferentially spaced. Once the rings have been attached to each other, all of the rings may form a single structure comprised of flat rings.

Adjacent rings may be rings that correspond to adjacent cross sections on the shell. Adjacent rings may be rings that are closest in size and/or radius (e.g. average radius) of the plurality of rings.

Corrugations may mean a shape defined by peaks and troughs. The peaks and troughs may be defined by a series of straight lines. The shape of the corrugations may be sinusoidal. The shape of the corrugations may be a repeating wave. The shape of the corrugations may be a triangular wave. The shape of the corrugations may be any shape that comprises peaks and troughs and repeats such that each peak is followed by a trough and each trough of followed by a peak. The peaks and troughs may be, for example, rounded or angular or flat.

Radially defined peaks may be where all parts of the peak fall on the same radial line with respect to the central axis. Radially defined troughs may be where all parts of the peak fall on the same radial line with respect to the central axis. Radially defined peaks and troughs may be defined by a series of radial lines.

The flat annular ring may be deformed into a series of peaks and troughs. The peaks and troughs may be defined such that they repeat around the circumference. The corrugations may proceed around the circumference. Each peak may be circumferentially adjacent a trough. Each trough may be circumferentially adjacent a peak. After the step of being deformed into a corrugated shape, the annular rings may have rotational symmetry.

The single structure may be expanded. The single structure may be expanded to the axial length of the annular shell. The structure may be pulled apart whereby it expands whilst maintaining the attachments between rings. When pulled apart, the rings may deform into a corrugated shape. The peaks and troughs of the corrugations may correspond with the attachment positions.

The three-dimensional structure may be a complementary structure. The three-dimensional structure may provide radial support to the shell. The three-dimensional structure may provide axial support to the shell. The three-dimensional structure may be proportioned in order to increase the radial support to the shell.

The step of attaching each ring to the ring(s) adjacent to it may be performed before the step of deforming each flat ring into a corrugated three-dimensional shape.

The step of deforming each flat annular ring may be performed when each flat annular ring is coupled to each other flat annular ring (i.e. to form a single structure). A (e.g. each) flat annular ring may be deformed by forces acting through the attachments.

The method may further provide two flat annular end plates. Each flat annular end plate may be attached to a flat annular ring, after the step of attaching each ring to the rings adjacent to it. The method may further comprise the step of pulling the two end plates away from each other in order to deform each flat annular ring into the corrugated three-dimensional shape.

The end plates may be annular. The end plates may be thicker and/or stiffer than the flat annular rings. The end plates may be made of the same or different material to the annular rings. The plates may be pulled away from each other by applying opposing forces to the end plates. The end plates may not deform when the rings are deformed and/or pulled away from each other. The annular rings may be pulled away from each other by applying forces evenly across the two end plates in opposing directions. The opposing directions may be normal to the surfaces of the end plates. The annular rings may be deformed and/or pulled away from each other by applying forces at discrete circumferential locations around the end plates. The rings may be deformed and/or pulled away from each other by applying forces at discrete circumferential locations coincident with the attachment positions between the end plates and the adjacent annular rings.

The shape of the flat annular rings may vary sinusoidally around its circumference.

The shape of the flat annular rings may be such that after the step of deforming the annular rings into a corrugated three-dimensional shape, the radially inner edges of the annular rings follow and/or match a conical shape (e.g. the shape of the shell). The shape of the flat annular rings may vary circumferentially in a repeating pattern such that they account and/or confirm to a gradient in the shell. The radius of the flat annular rings may vary sinusoidally around its circumference. The radius of the flat annular rings may vary in a repeating pattern around its circumference.

The step of attaching each ring to the rings adjacent to it may be performed after the step of deforming each flat ring into a corrugated three-dimensional shape.

Each annular ring may be attached to adjacent rings at its peaks and troughs. Each peak of an annular ring may be attached to each trough of an adjacent annular ring. Each trough of an annular ring may be attached to each peak of an adjacent annular ring.

The attachments between each two adjacent rings may form a set of connections. Each set of connections may be regularly, circumferentially offset from adjacent sets of connections.

Each attachment within a set of connections may be at the same radius. Each ring, apart from the two end rings or two end plates, will have two sets of connections (i.e. to the adjacent rings on either side).The end rings or end plates will only have one set of connections (i.e. because they only have one adjacent ring).

The attachments in adjacent sets of connections may be offset circumferentially by a constant connection angle throughout the single structure. The connection angle may be half of the angle between attachments. Sets of connections separate by a single set of connections may have attachments at the same circumferential positions.

The attachments may be located on the radially outer edges and/or radially inner edges of each ring.

The attachments may be between the outer edge of one ring and the inner edge of an adjacent ring of larger size. The rings may have attachments that span at least part way across the radial width of the rings, whereby the attachments are relatively thin circumferentially compared to their radial dimension. The end rings may be attached to their adjacent rings whereby the attachments are relatively thin circumferentially compared to their radial dimension.

The attachments may be located across the radial width of the annular rings.

The shell may be frustoconical. The plurality of rings may be formed concentrically from a single sheet.

The radial width of the rings may be equal to the difference in radius of adjacent cross sections. Where the difference in radius of adjacent cross sections varies around its circumference, the radial width of the annular rings may vary around their circumference.

The plurality of rings may be formed by laser cutting. The plurality of rings may be formed by laser cutting the single sheet. Connections may be left between rings that form the attachments between adjacent rings.

The laser may cut incomplete shapes corresponding to cross sections, the short sections of the cut that are incomplete relate to the attachments. The attachments may therefore be formed from the sheet. The part laser cut from the sheet may be a single structure formed of annular rings and attachments between rings. Other cutting methods than laser cutting may be used, for example water jet cutting.

The rings may be formed of a conductive material. The attachments between rings may be achieved by applying non-conductive material (e.g. a material of high electrical resistance) between adjacent rings at discrete regular locations and applying an electric current through the plurality of rings such that welding of adjacent rings occurs where the non-conductive material is applied.

The non-conductive material may be a material of high electrical resistance. The material of high electrical resistance may increase in temperature when the current is passed through it (e.g. to a temperature that results in the welding).

The width of each ring in the radial direction may be more than five times the thickness of the ring in the axial direction.

The width of each ring in the radial direction may be more than three times the thickness of the ring in the axial direction. The width of each ring in the radial direction may be more than four times the thickness of the ring in the axial direction. The width of each ring in the radial direction may be more than six times the thickness of the ring in the axial direction. The width of each ring in the radial direction may be more than seven times the thickness of the ring in the axial direction. The width of each ring in the radial direction may be more than ten times the thickness of the ring in the axial direction.

Each ring may form a corrugated shape within the three-dimensional structure.

The corrugations may be purely in the axial direction i.e. the rings may not twist, or be substantially un-twisted, as they are deformed. Corrugations may be in more than one direction, for example they may include a twist in the rings after they have been deformed.

The distance between the peaks and troughs of the corrugations may be equal to or greater than the width of each ring in the radial direction.

The distance between the peaks and troughs of the corrugations may be more than three times the width of each ring in the radial direction. The distance between the peaks and troughs of the corrugations may be more than four times the width of each ring in the radial direction. The distance between the peaks and troughs of the corrugations may be more than five times the width of each ring in the radial direction. The distance between the peaks and troughs of the corrugations may be more than six times the width of each ring in the radial direction. The distance between the peaks and troughs of the corrugations may be more than ten times the width of each ring in the radial direction.

The shell may be metallic. The rings may be metallic.

The shell and the rings may be made from the same material. The shell and the rings may be made from the same thickness of sheet material. The shell may be made from flat sheet curved into an annular skin.

According to a second aspect there is provided a method as described and/or claimed herein for manufacturing a part for a gas turbine.

The method may be for manufacturing a duct (e.g. a bleed outlet duct). The method may be for manufacturing a bleed outlet duct.

The method may be for manufacturing an annular part of a bleed outlet duct. The method may be for manufacturing an annular part of a part for a gas turbine.

According to a third aspect there is provided a part manufactured by the process as described and/or claimed herein.

According to a fourth aspect there is provided an annular component comprising an annular shell and a complementary structure attached to a radially outer wall of the shell and providing structural reinforcement to it. The complementary structure is an expanded three-dimensional structure.

The three dimensional structure may be expanded by a method as described and/or claimed herein. The expanded three dimensional structure may be metallic. The complementary structure may be attached to provide a mechanical join to the shell. The complementary structure may be a separate component to the shell.

The complementary structure may comprise a plurality of corrugated annular rings forming a structure extending along an axial direction of the shell.

The distance between the peaks and troughs of the corrugations may be more than three times the width of each ring in the radial direction.

The width of each ring in the radial direction may be more than five times the thickness of the ring in the axial direction.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a sectional view of a bleed outlet duct;
**Figure 3** is an annular part with diamond web reinforcement known in the prior art;
**Figure 4** is a frustoconical annular component with an annular ring;
**Figure 5** shows concentric annular rings that could, for example, be cut from a single sheet;
**Figure 6** shows concentric annular rings with attachments between rings formed by incomplete laser cutting of the sheet material;
**Figure 7** shows concentric annular rings with attachments between rings formed by applying non-conductive material; and
**Figure 8** is an annular component with a skin and a complementary structure attached.
**Figure 9a** is a plan view showing two flat annular rings with a shape that varies sinusoidally around its circumference.
**Figure 9b** is a plan view showing a structure created from deformed annular rings with shapes that vary sinusoidally around their circumference.

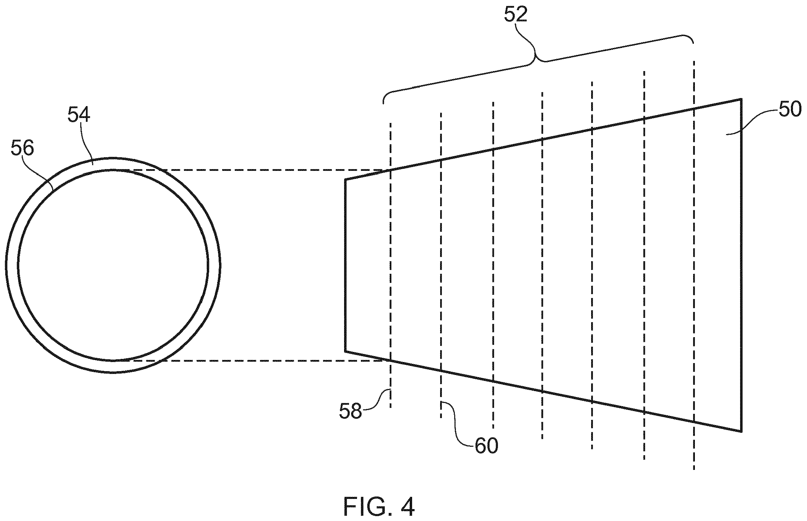

With reference to Figure 4 there is shown a frustoconical annular component 50. Marked on the annular component 50 is a series of locations for cross sections 52 of the annular component 50. A single annular ring 54, from a set of annular rings, is shown, in isolation from the set of annular rings, to demonstrate the relationship between the ring and the annular component. The inner edge 56 corresponds with the cross section 58, as shown by dotted lines A and B.

The cross sections 52 represent the cross sections of the annular component 50 that the annular rings (one of which is shown as a singular annular ring 54) correspond to. The inside edge 56 of the single annular ring 54 matches the shape of the cross section 58. In the complete design, further annular rings would be provided (i.e. a plurality of annular rings) with each ring corresponding to a cross section 52. Cross section 60 is an example of an adjacent cross section to cross section 58. The ring 54 would therefore have an adjacent ring that corresponds to cross section 60. Cross section 58 is adjacent to cross section 60. Cross section 60 is also adjacent to another cross section (not labelled) on the other side to cross section 58.

In Figure 4 there are 7 cross sections, but there may be greater or fewer cross sections depending on the application. In Figure 4 the annular ring 54 shown is circular but in other embodiments it may have other shapes (for example an ellipse). The frustoconical annular component of Figure 4 may be cylindrical or another shape.

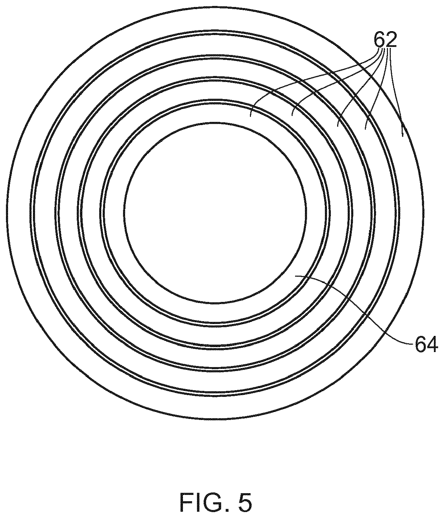

Figure 5 shows a series of concentric annular rings 62. Each ring is sized such that it nests inside an adjacent ring such that all the rings 62 can be formed from a single sheet of material (for example a metal) no larger than the size of the largest ring. The rings 62 in this example could be cut from a single sheet using, for example, laser cutting.

In Figure 5, 5 rings are shown but a greater or fewer number of annular rings may be provided depending on the embodiment. The inner ring 64 corresponds with the single annular ring 54 and cross section 58 of Figure 4. The other rings 62 each correspond to another cross section, for example the other cross sections 52 of Figure 4.

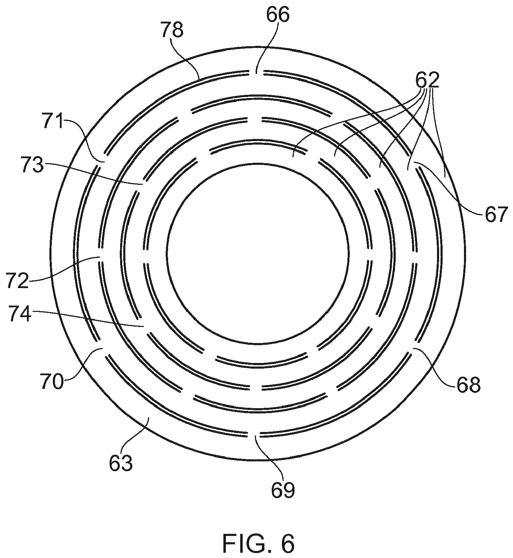

Figure 6 shows the concentric annular rings 62 of Figure 5 with attachments shown between rings 66-74. The attachments between rings, for example 66, represent attachments at discrete circumferential locations.

The attachments 66-71 are evenly (e.g. regularly) circumferentially spaced around the inner edge of the largest ring 63, between the largest ring and the second largest ring. Attachments 66-71 represent a set of connections. In Figure 6 there are four sets of connections at different radii, however in other embodiments there may be greater or fewer sets of connections. In the example shown in Figure 6 there is a number of sets of connections equal to one less than the number of annular rings.

The attachments of Figure 6 are formed due to the laser cutter cutting incomplete circles in the sheet. For example the gap 78 is cut by a laser cutter leaving attachments 66 and 71 on either side.

Attachment 72 is part of an adjacent set of connections to the set of connections formed by attachments 66-71. Attachment 72 can be seen to be circumferentially offset from attachments 70 and 71. In Figure 6, the attachment 72 is offset by half the angle between attachments 70 and 71. This offset is repeated for the next set of attachments that attachments 73 and 74 form a part of. It can therefore be seen that attachment 73 and 71, and 74 and 70, are at the same circumferential position. The set of connections that attachments 73 and 74 form a part of are offset from the set of connections that 70 and 71 form a part of by one set of attachments (that attachment 72 forms a part of). In other embodiments other offsets of different angles between sets of connections may be required.

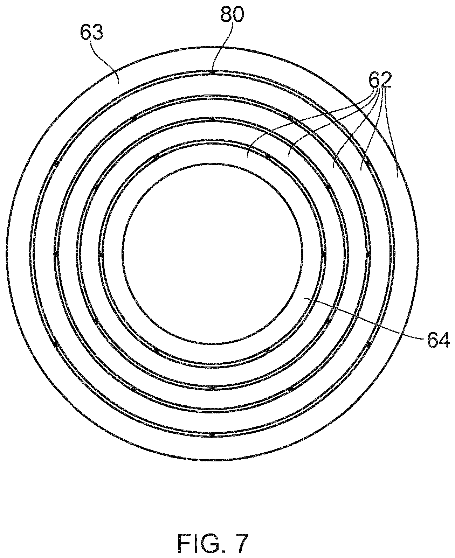

Figure 7 shows the same arrangement of rings 62 as Figure 6 but with an alternative type of attachment. Instead of the attachment 66 of Figure 6 there is provided non-conductive material 80 at the discrete locations of the attachment positions. Once non-conductive material has been placed at all of the attachment positions, a voltage is placed over the structure between the outer ring 63 and the inner ring 64. The higher resistance of the non-conductive material 80 causes an increase in temperature at these points. This results in welding between the rings at the attachment positions.

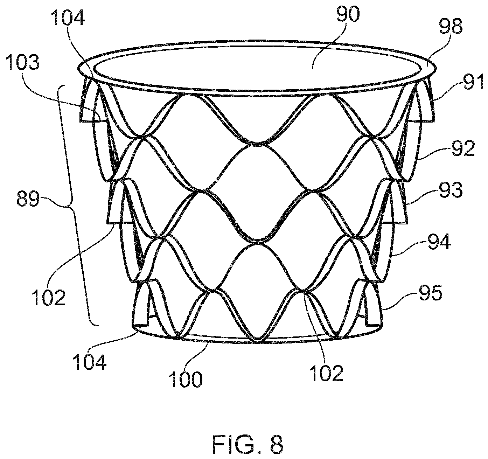

Figure 8 shows an annular component formed of a shell 90 and a complementary structure 89. The complementary structure 89 is formed of five annular rings 91-95 that have been attached to each other at attachment positions, for example position 102, and then deformed into the corrugated shape shown. The attachment position 102 is between the inside edge of one annular ring and the outside edge of an adjacent annular ring. The two end rings 98 and 100 can either be separate rings or lips of the shell 90. The complementary structure 89 is attached to the shell 90 at, for example, location 103 (and other corresponding locations) and to the end rings at locations 104.

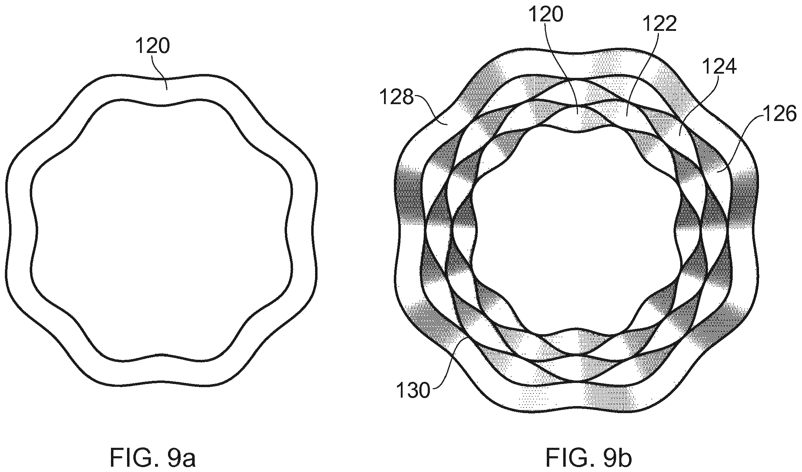

Figure 9a show a plan view of a flat annular ring 120 with a shape that varies sinusoidally around the circumference. Figure 9a shows how the radius of the annulus formed by the ring increases and decreases in a sinusoidal fashion around the circumference. Annular ring 120 can be seen to have rotational symmetry.

Figure 9b shows a plan view of a series of the annular rings (120, 122, 124, 126, 128) of the type shown in figure 9a. Each ring (120, 122, 124, 126, 128) is a different diameter, for example ring 128 is the largest and ring 120 is the smallest. The annular rings in figure 9b have been deformed into a corrugated three dimensional shape. The corrugations are out of the flat plane of the annular ring. For example in Figure 9b the peaks are extending out of the plane of figure 9b. In the example shown in Figure 9b, all surfaces of a deformed ring can be formed of individual lines that are parallel to the flat plane of the annular ring. That is to say, the ring contains no twist. In other embodiments the ring can contain twist. In the example shown in Figure 9b, the peaks of the corrugations correspond with the parts of the shape of the annular ring that are at the greatest radial extent of the sinusoidally varying shape of the ring. The troughs of the corrugations correspond with the parts of the shape of the annular ring that are at the least radial extent of the sinusoidally varying shape of the ring. This allows for the result that when the annular ring is deformed into a corrugated three dimensional shape, the inner edge of the annular ring conforms to a conical shape. The deformed annular ring therefore can correspond and provide support to a frustoconical shell whilst providing contact between the inner edge of the annular ring and the shell across the whole of the inner edge. In other embodiments the inner edge of the annular ring may not be shaped to contact a shell across the whole span of the inner edge, but closely follow the shape of the shell regardless.

Figure 9b shows a structure created from five annular rings (120, 122, 124, 126, 128). The annular rings are joined together at attachments, for example attachment 130. The attachments are between the peak of one annular ring and the trough of an adjacent annular ring. The attachments in Figure 9b are across the width of the annular ring. In other embodiments the attachments may be between a point, for example on the inner edge of an annular ring, on one annular ring and another point, for example on an outer edge of an adjacent annular ring. Figure 9b shows eight attachments between each ring and one of the adjacent rings. These eight attachments form a set of attachments. The circumferential locations of each set of attachments are offset compared to an adjacent set of attachments.

A method of manufacturing an annular component with a shell and a complementary structure will now be described with reference to the accompanying drawings. A shell 50 is provided, for example that shown in Figure 4. A laser cutter cuts a series of broken circles into a sheet creating the arrangement shown in Figure 6 whereby a number of concentric annular flat rings are formed with attachments between rings forming a single structure. The single structure shown in Figure 6 is pulled apart whereby the rings deform into rings 91-95 with corrugated shapes as shown in Figure 8. This three dimensional structure, comprised of the corrugated rings, is then attached to the shell 90 of Figure 8, which in this example is an embodiment of the shell 50 in Figure 4.

An alternative method of manufacturing an annular component with a shell and a complementary structure will be described with reference to figures 9a and 9b. A plurality of flat annular rings, for example annular ring 120, are provided. Each flat annular ring has a shape whose radius sinusoidally varies around the circumference. Each ring is of a different radius (e.g. average radius). Each ring is deformed into a corrugated three dimensional shape. Each ring is attached to an adjacent ring, for example a ring closest in size to it out of the plurality of rings. In the embodiment described the rings are attached by welding but in other embodiments other attachment methods may be used. The attachments may be formed, for example, by welding or using fasteners. The completed structure of attached, annular rings can then be attached to a shell.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method of manufacturing an annular component, the method comprising the steps of:
providing an annular shell (50, 90) to form the outer wall of the component;
providing a plurality of flat annular rings (54, 62, 63, 64, 91, 92, 93, 94, 95) wherein a radially inner edge (56) of each ring is shaped to correspond to a cross-section (52, 58, 60) of the shell at a different position along its length;
attaching each ring to the ring(s) adjacent to it at a plurality of circumferentially spaced discrete positions (66, 67, 68, 69, 70, 71, 72, 73, 74, 102);
deforming each flat annular ring into a corrugated three-dimensional shape, wherein the corrugations extend out of the flat plane and comprise radially defined peaks and troughs;
locating the shell within the plurality of attached, deformed annular rings; and
attaching the plurality of attached, deformed annular rings to the shell to form the component, so that the plurality of attached, deformed annular rings provide structural reinforcement to the shell.

2. The method according to claim 1, wherein
the step of attaching each ring to the ring(s) adjacent to it is performed before the step of deforming each flat ring into a corrugated three-dimensional shape.

3. The method according to claim 2, further providing
two flat annular end plates (98, 100); wherein
each flat annular end plate is attached (104) to a flat annular ring, after the step of attaching each ring to the rings adjacent to it; the method further comprises the step of:
pulling the two end plates away from each other in order to deform each flat annular ring into the corrugated three-dimensional shape.

4. The method according to claim 1, wherein
the step of attaching each ring to the rings adjacent to it is performed after the step of deforming each flat ring into a corrugated three-dimensional shape.

5. The method according to any one of the previous claims, wherein
the shape of the flat annular rings varies sinusoidally around its circumference.

6. The method according to any one of the previous claims, wherein
the attachments between each two adjacent rings form a set of connections; and
each set of connections is regularly, circumferentially offset from adjacent sets of connections.

7. The method according to any one of the previous claims, wherein
the shell is frustoconical; and
the plurality of rings are formed concentrically from a single sheet; wherein optionally connections are left between rings that form the attachments between adjacent rings.

8. The method according to any one of the previous claims, wherein
the rings are formed of a conductive material; and
the attachments between rings are achieved by applying non-conductive material (80) between adjacent rings at discrete regular locations and applying an electric current through the plurality of rings such that welding of adjacent rings occurs where the non-conductive material is applied.

9. The method according to any one of the previous claims, wherein
the width of each ring in the radial direction is more than five times the thickness of the ring in the axial direction.

10. The method according to any one of the previous claims, wherein
each ring forms a corrugated shape within the three-dimensional structure; wherein optionally the distance between the peaks and troughs of the corrugations is equal to or greater than the width of each ring in the radial direction.

11. A method according to any one of the previous claims for manufacturing a part for a gas turbine; wherein optionally the part is a duct (e.g. a bleed outlet duct).

12. A part manufactured by the process according to any one of the previous claims.

13. An annular component comprising:
an annular shell;
a complementary structure attached to a radially outer wall of the shell and providing structural reinforcement to it;
**characterised in that** the complementary structure is an expanded three-dimensional structure.

14. The component according to claim 13, wherein
the complementary structure comprises a plurality of corrugated annular rings forming a structure extending along an axial direction of the shell; wherein optionally the distance between the peaks and troughs of the corrugations is more than three times the width of each ring in the radial direction.

15. The component according to any one of claims 13 or 14, wherein
the width of each ring in the radial direction is more than five times the thickness of the ring in the axial direction.
